# FASCICULE DE BREVET EUROPEEN

(11) **EP 3 732 258 B1**
(45) Date de publication et mention de la délivrance du brevet: **15.03.2023**
(21) Numéro de dépôt: 18842820.5
(22) Date de dépôt: 28.12.2018
(51) Int. Cl.: C09D 5/08, C09D 163/00, C09D 5/03, F16F 1/02, C09D 7/61, C09D 7/40, C08K 3/38

(54) **ÉLÉMENT DE SUSPENSION DE VÉHICULE POURVU D'UN REVÊTEMENT, PROCÉDÉ DE DÉPÔT DE CE REVÊTEMENT ET COMPOSITION DE REVÊTEMENT POUR CE PROCÉDÉ**
FAHRZEUGAUFHÄNGUNGSELEMENT MIT EINER BESCHICHTUNG, VERFAHREN ZUR ABSCHEIDUNG DER BESCHICHTUNG UND BESCHICHTUNGSZUSAMMENSETZUNG FÜR DIESES VERFAHREN
VEHICLE SUSPENSION ELEMENT PROVIDED WITH A COATING, METHOD FOR DEPOSITING SAID COATING AND COATING COMPOSITION FOR THIS METHOD

(30) Priorité: 29.12.2017 FR 1763414
(43) Date de publication de la demande: 04.11.2020
(73) Titulaire: Sogefi Suspensions, 78280 Guyancourt (FR)
(72) Inventeur: DERAM, Dominique, 59500 Douai (FR)
(74) Mandataire: Cabinet Beau de Loménie
(86) Numéro de dépôt international: PCT/FR2018/053567
(87) Numéro de publication internationale: WO 2019/130008

(56) Documents cités:
- WO-A1-2015/063024
- WO-A1-2016/014536
- WO-A1-2017/163877
- US-A1- 2007 172 665

## Description

### DOMAINE DE L'INVENTION

Le présent exposé concerne un élément de suspension de véhicule pourvu d'un revêtement, un procédé de dépôt de ce revêtement et une composition de revêtement pour ce procédé.

### ARRIÈRE-PLAN TECHNOLOGIQUE

La plupart des suspensions de véhicule actuellement sur le marché comprennent des ressorts, lesquels sont en général hélicoïdaux.

Ces ressorts, qui sont très fortement sollicités mécaniquement, sont le plus souvent réalisés en acier. Par conséquent, ils doivent impérativement être protégés contre la corrosion, faute de quoi la corrosion de l'acier conduirait à une perte de fonction du ressort, puis à sa rupture catastrophique.

À cette fin, ces ressorts sont pourvus d'un revêtement recouvrant l'acier et le protégeant de la corrosion.

Ce revêtement doit présenter à la fois une excellente résistance mécanique et une excellente adhésion à l'acier du ressort. La résistance mécanique est nécessaire pour garantir que le revêtement résiste au gravillonnage, c'est-à-dire à l'impact répété à haute vitesse de gravillons (dont la taille peut être de l'ordre du centimètre). La résistance au gravillonnage est mesurée par des protocoles d'essai de gravillonnage standardisés, comme le protocole SAE J400.

L'adhésion à l'acier du ressort est nécessaire pour garantir que le revêtement reste en place sur le ressort même s'il est endommagé et/ou aminci. Si la résistance mécanique et/ou l'adhésion du revêtement sont insuffisantes, l'acier du ressort risque d'être mis à nu, ce qui conduit inévitablement à une corrosion très rapide de l'acier, en particulier l'hiver lorsque le véhicule est exposé à la fois à l'humidité et au sel utilisé pour le salage des routes. En outre, les suspensions de véhicule actuellement sur le marché n'étant pas prévues pour que leurs ressorts puissent être fréquemment remplacés, le revêtement doit conserver sa résistance mécanique et ses propriétés d'adhésion sur une très longue période, qui correspond sensiblement à la durée de vie prévue du ressort lui-même.

Divers revêtements sont connus à cet effet.

On connaît tout d'abord des revêtements constitués d'une unique couche de peinture époxy ou époxy/polyester déposée sur la surface du ressort (laquelle peut éventuellement avoir subi un traitement de surface préalable) puis durcie, et dont l'épaisseur moyenne est typiquement comprise entre 35 µm et 200 µm.

Par exemple, WO 2015/063024 A1 divulgue un élément de suspension de véhicule, par exemple un ressort hélicoïdal, pourvue d'un revêtement comprenant une couche en polyépoxyde réticulé à base de bisphénol A comprenant une charge de fibres et un promoteur d'adhésion comme par exemple un copolymère adsorbé sur la silice, et présentant une épaisseur de 80-1000 µm. L'élément de suspension est préchauffé à 104-194°C avant l'application du revêtement polyépoxyde en poudre.

Ces revêtements ne sont adéquats que pour obtenir une résistance modérée au gravillonnage, correspondant à une utilisation en climat tempéré et sur des routes en bon état. Ils sont insuffisants pour une utilisation dans des conditions plus difficiles : climats extrêmes (notamment très froids), routes dégradées (notamment fortement gravillonneuses), ressort fortement contraint mécaniquement, etc.

Pour ces conditions d'utilisation plus difficiles, on connaît des revêtements constitués d'une première couche de peinture déposée sur la surface du ressort (laquelle peut éventuellement avoir subi un traitement de surface préalable) et d'une épaisseur moyenne typiquement de l'ordre de 50 µm, et d'une deuxième couche de peinture de composition différente, déposée sur la première couche de peinture et d'une épaisseur moyenne typiquement de l'ordre de 200 µm.

Pour obtenir ces revêtements, il est nécessaire de faire passer le ressort à revêtir successivement par un minimum de deux postes d'application distincts, ce qui augmente le nombre d'équipements, la main-d'oeuvre et le temps total nécessaires pour revêtir le ressort et est pénalisant en termes de coût. De plus, afin d'atteindre la durée de vie désirée, on peut aussi être contraint d'augmenter l'épaisseur de la première couche et/ou de la deuxième couche de peinture, ce qui est aussi pénalisant en termes de coût.

Malgré les inconvénients pré-cités, ces revêtements sont encore utilisés aujourd'hui, car il s'est jusqu'ici avéré impossible d'obtenir un revêtement qui soit satisfaisant en conditions d'utilisation difficiles tout en étant constitué d'une seule couche.

Il existe donc un réel besoin d'un procédé de dépôt d'un revêtement qui permettrait d'obtenir un revêtement satisfaisant en conditions d'utilisation difficiles tout en étant constitué d'une seule couche.

### PRÉSENTATION DE L'INVENTION

Le présent exposé concerne un élément de suspension de véhicule pourvu d'un revêtement, le revêtement comprenant une matrice de polymère réticulé comprenant un polyépoxyde et présentant une épaisseur minimum au moins égale à 120 µm. Dans certains modes de réalisation, le revêtement présente une épaisseur minimum au moins égale à 200 µm.

Dans certains modes de réalisation, le revêtement est constitué d'une unique couche déposée en une seule étape de dépôt.

Le revêtement comprend, dans la matrice de polymère réticulé :
- une charge de fibres d'une longueur moyenne en nombre au moins égale à 100 µm ;
- une charge de silice présentant un diamètre médian en masse au moins égal à 1 µm ;
- une première charge de céramique présentant un diamètre médian en masse compris entre 30 µm et 70 µm ; et
- une deuxième charge de céramique présentant un diamètre médian en masse au moins égal à 10 µm.

Le diamètre médian en masse, couramment noté « Dw50 » ou plus simplement « D50 », est une grandeur courante en analyse granulométrique. On rappelle simplement ici que le diamètre médian en masse d'un échantillon de particules est le diamètre de particule telle que 50% de la masse de cet échantillon est constituée de particules d'une taille inférieure ou égale à ce diamètre.

Des méthodes d'analyse granulométrique permettant de déterminer le diamètre médian en masse sont bien connues. Par exemple, le diamètre médian en masse peut être mesuré par tamisage.

Du fait de leur relative longueur, les fibres constituent un réseau macroscopique dans la matrice de polymère réticulé du revêtement. Étant de taille relativement petite par rapport aux fibres, les particules des deux charges de céramique viennent densifier ce réseau macroscopique, ce qui améliore encore la résistance mécanique du revêtement. Enfin, étant de taille encore plus petite, les particules de la charge de silice viennent encore densifier ce réseau macroscopique ; et leur dureté importante confère au revêtement une grande résistance à la compression lors de l'impact de gravillons.

Ces différents facteurs interagissent pour conférer au revêtement une résistance au gravillonnage nettement plus importante que les revêtements connus jusqu'ici, pour une même épaisseur de revêtement. Il est donc possible ou bien de diminuer l'épaisseur de revêtement à déposer en conservant la même durée de vie du revêtement, ou bien d'augmenter la durée de vie du revêtement pour une même épaisseur de revêtement.

Dans certains modes de réalisation, ladite longueur moyenne en nombre de la charge de fibres est comprise entre 100 µm et 150 µm.

Dans certains modes de réalisation, les fibres de la charge de fibres présentent une longueur comprise entre 100 µm et 150 µm.

En plus de conférer au revêtement une résistance au gravillonnage nettement plus importante que les revêtements connus jusqu'ici, pour une même épaisseur de revêtement, les fibres de cette longueur sont suffisamment courtes pour conserver au revêtement un aspect lisse et brillant.

Dans certains modes de réalisation, les fibres de la charge de fibres présentent un diamètre compris entre 3 µm et 4 µm.

Dans certains modes de réalisation, l'élément de suspension comprend, entre le revêtement et la surface de l'élément de suspension, une couche de cristaux de phosphates, les cristaux de phosphates présentant une taille moyenne en nombre au plus égale à 20 µm, et de préférence au plus égale à 10 µm.

La couche de cristaux de phosphates formée lors de cette étape améliore grandement l'adhésion de la matrice de polymère réticulé sur la surface de l'élément de suspension.

Dans certains modes de réalisation, l'élément comprend, entre le revêtement et la couche de cristaux de phosphates, une couche de silanes et/ou de silanes substitués.

La couche formée lors de cette étape améliore encore l'adhésion de la matrice de de polymère réticulé sur la surface du ressort.

Dans certains modes de réalisation, la masse surfacique de la couche de cristaux de phosphates est comprise entre 1,5 g/m² et 4 g/m², et de préférence comprise entre 2,0 g/m² et 3,5 g/m².

Dans certains modes de réalisation, l'élément de suspension est un ressort pour suspension, par exemple un ressort hélicoïdal, ou une barre stabilisatrice cambrée, ou une barre droite.

Dans certains modes de réalisation, l'élément de suspension est en acier.

Dans certains modes de réalisation, l'épaisseur minimum du revêtement est au plus égale à 1200 µm.

Le présent exposé concerne aussi un procédé de dépôt d'un revêtement sur élément de suspension de véhicule, le procédé comprenant les étapes de :
fourniture de l'élément de suspension à revêtir ;
préchauffage de la surface de l'élément de suspension à une température de préchauffe au moins égale à 80°C ;
dépôt sur la surface préchauffée de l'élément de suspension d'une composition réticulable comprenant un composé époxy ; et
chauffage de la surface de l'élément de suspension, de manière à réticuler la composition, conduisant ainsi au revêtement,
le revêtement ainsi obtenu présentant une épaisseur minimum au moins égale à 120 µm. Dans certains modes de réalisation, la température de préchauffe est au moins égale à 100°C, et/ou le revêtement présente une épaisseur minimum au moins égale à 200 µm.

Par « composition réticulable », on entend désigner une composition comprenant au moins un monomère et au moins un durcisseur, et qui est apte à réticuler (ou durcir), sous l'effet de la chaleur, cette réaction étant irréversible et conduisant à la formation d'un polymère réticulé. Une composition réticulable peut comprendre en outre un ou plusieurs additifs et/ou une ou plusieurs charges. Par « composé époxy », on entend désigner un composé chimique comprenant au moins deux groupes fonctionnels époxy, et apte à former un polyépoxyde sous l'effet de la chaleur et en présence d'un durcisseur.

La composition réticulable comprend :
- une charge de fibres d'une longueur moyenne en nombre au moins égale à 100 µm ;
- une charge de silice présentant un diamètre médian en masse au moins égal à 1 µm ;
- une première charge de céramique présentant un diamètre médian en masse compris entre 30 µm et 70 µm ; et
- une deuxième charge de céramique présentant un diamètre médian en masse au moins égal à 10 µm.

Dans certains modes de réalisation, ladite température supérieure à la température de préchauffe est au plus égale à 200°C.

Dans certains modes de réalisation, le procédé comprend en outre, avant l'étape de dépôt, une étape de phosphatation conduisant à la formation, sur la surface de l'élément de suspension, d'une couche de cristaux de phosphates, les cristaux de phosphates présentant une taille moyenne en nombre au plus égale à 20 µm, et de préférence au plus égale à 10 µm.

Dans certains modes de réalisation, ladite étape de phosphatation est effectuée avant l'étape de préchauffage.

Dans certains modes de réalisation, le procédé comprend en outre, après l'étape de phosphatation, une étape de passivation conduisant à la formation, sur les cristaux de phosphates, d'une couche de silanes.

Dans certains modes de réalisation, ladite étape de passivation est effectuée avant l'étape de préchauffage.

Dans certains modes de réalisation, la composition réticulable est sous forme de poudre avant l'étape de dépôt.

Dans certains modes de réalisation, la composition réticulable étant sous forme de poudre avant l'étape de dépôt, le dépôt de ladite poudre sur la surface de l'élément de suspension est effectué par projection électrostatique.

Dans certains modes de réalisation, la composition réticulable comprend en outre au moins un agent anticorrosion.

La présence d'un ou plusieurs agents anticorrosion permet de ralentir ou d'empêcher la progression d'une éventuelle corrosion locale de l'acier sous le revêtement, qui pourrait à terme endommager le revêtement lui-même.

De préférence, l'agent anticorrosion est dépourvu d'élément zinc, ce qui diminue l'impact du procédé sur l'environnement. Plus préférablement encore, la composition réticulable est dépourvue d'élément zinc.

Dans certains modes de réalisation, le composé époxy est à base de bisphénol A.

Par « bisphénol A », on entend désigner le 4,4'-dihydroxy-2,2-diphénylpropane. Ce composé chimique est aussi connu sous les appellations BPA, 2,2-bis(4-hydroxyphényl)propane, 4,4'-(propan-2-ylidène)diphénol, ou encore p,p'-isopropylidènebisphénol.

Le procédé décrit ci-dessus présente les mêmes avantages que l'élément de suspension de véhicule décrit ci-dessus.

Le présent exposé concerne en outre une composition réticulable pour un revêtement pour élément de suspension de véhicule, dans laquelle la composition réticulable comprend :
- un composé époxy ;
- une charge de fibres d'une longueur moyenne en nombre au moins égale à 100 µm ;
- une charge de silice présentant un diamètre médian en masse au moins égal à 1 µm ; et
- une première charge de céramique présentant un diamètre médian en masse compris entre 30 µm et 70 µm ;
- une deuxième charge de céramique présentant un diamètre médian en masse au moins égal à 10 µm ; et
- un durcisseur apte à faire réticuler la composition lorsque la composition est chauffée. La composition réticulable peut en outre comprendre un accélérateur.

### BRÈVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue en perspective d'un élément de suspension de véhicule conforme au présent exposé.
La FIG 2 est un diagramme-blocs exposant les étapes d'un procédé de dépôt du revêtement du ressort de la FIG 1, lequel procédé est conforme au présent exposé.
La FIG 3 est une vue en coupe partielle selon III-III de l'élément de suspension de la FIG 1.

### DESCRIPTION DÉTAILLÉE DE L'INVENTION

Afin de rendre plus concrète l'invention, des exemples d'élément de suspension de véhicule, et des exemples de procédé de dépôt d'un revêtement sur un élément de suspension de véhicule sont décrits en détail ci-après, en référence aux dessins annexés. Il est rappelé que l'invention ne se limite pas à ces exemples.

Par « élément de suspension de véhicule », on entend tout élément apte à être installé dans une suspension de véhicule (non représentée) afin de contribuer à la tenue de route du véhicule, comme par exemple un ressort pour suspension de véhicule, une barre stabilisatrice cambrée (également appelée barre anti-dévers ou barre antiroulis) ou encore une barre droite. Dans la suite, on décrira le cas où l'élément de suspension de véhicule est un ressort pour suspension de véhicule, étant entendu que ce qui suit peut être généralisé aisément à tout élément de suspension de véhicule. Le procédé de dépôt d'un revêtement décrit ici est particulièrement utile lorsque l'élément de suspension de véhicule est exposé au gravillonnage lorsque le véhicule roule.

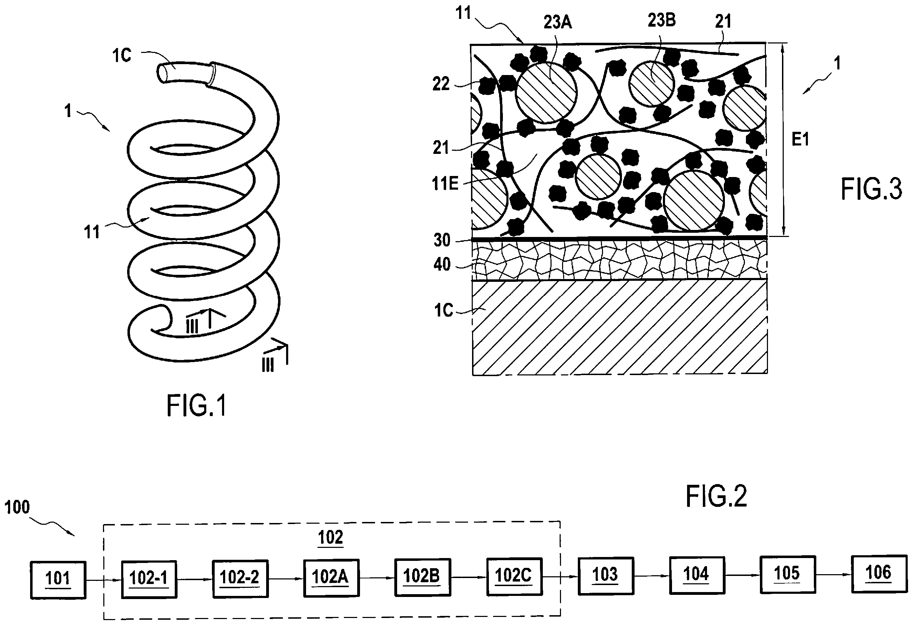

La FIG 1 est une vue en perspective d'un ressort 1 pour suspension de véhicule.

Le ressort 1 est apte à être installé dans une suspension de véhicule (non représentée). Pour ce faire, les extrémités du ressort 1 sont aptes à être reçues dans des coupelles correspondantes (non représentées), comme cela est connu.

Dans l'exemple représenté, le ressort 1 est un ressort hélicoïdal. Dans d'autres exemples (non représentés), le ressort 1 est un ressort non hélicoïdal, tel qu'un ressort à lame.

Dans l'exemple représenté, le ressort 1 est en acier. Dans d'autres exemples (non représentés), le ressort 1 est en un alliage métallique autre que l'acier. Dans encore d'autres exemples (non représentés), le ressort 1 est en matériau composite. On précise ici que tout élément de suspension de véhicule conforme au présent exposé peut être réalisé en acier, en un alliage métallique autre que l'acier, ou en matériau composite.

Sur les dessins annexés, l'acier constituant le ressort 1 porte la référence 1C.

Le ressort 1 est pourvu d'un revêtement 11. Le revêtement 11 recouvre l'acier 1C du ressort 1 et le protège ainsi de la corrosion. En outre, le revêtement 11 est apte à résister au gravillonnage. Bien que la FIG 1 montre qu'une partie de l'acier 1C n'est pas recouvert par le revêtement 11, en pratique, la totalité du ressort 1 est pourvue du revêtement 11, sauf éventuellement les zones nécessaires à l'installation du ressort 1 dans un système de convoyage pendant le procédé 100 décrit plus loin.

L'épaisseur du revêtement 11 peut ou non être variable le long du ressort 1. En tout état de cause, le revêtement 11 présente une épaisseur minimum E1 au moins égale à 120 µm. L'épaisseur minimum E1 peut être au moins égale à 200 µm.

Dans le présent exposé, les expressions « au moins égal(e) à X », « au plus égal(e) à Y », « compris(e) entre X et Y » englobent les valeurs extrémales X et Y.

Le revêtement 11 présente une épaisseur moyenne minimum préférablement au moins égale à 250 µm, plus préférablement au moins égale à 350 µm, plus préférablement encore au moins égale à 450 µm, plus préférablement encore au moins égale à 500 µm, et plus préférablement encore au moins égale à 700 µm.

Le revêtement 11 comprend une matrice de polymère réticulé 11E (qui, dans la suite, pourra être désignée simplement par « la matrice 11E » par commodité). La matrice 11E comprend un polyépoxyde. Cette matrice 11E présente l'avantage de présenter une excellente résistance mécanique, et notamment une bonne résistance au gravillonnage comme cela sera détaillé ultérieurement. Elle présente aussi une excellente adhésion à l'acier 1C du ressort 1. La matrice 11E peut être constituée d'un mélange de polyépoxydes ou d'un unique polyépoxyde.

La FIG 2 est un diagramme-blocs exposant les étapes d'un procédé 100 de dépôt du revêtement 11 sur le ressort 1.

Le procédé 100 comprend une étape 101 de fourniture du ressort à revêtir. Plus concrètement, on fournit le ressort 1 non revêtu. Par exemple, si le ressort 1 est en acier, on fournit le ressort 1 après la mise en forme de l'acier 1C, laquelle mise en forme aura éventuellement été suivie d'une étape de grenaillage.

Le procédé 100 comprend en outre une étape 103 de préchauffage de la surface du ressort 1.

Plus concrètement, pendant l'étape de préchauffage 103, la surface du ressort est chauffée à une température de préchauffe choisie à l'avance. Pendant l'étape de préchauffage 103, la surface du ressort 1 peut être chauffée par projection d'air chauffé et/ou par infrarouges, par exemple.

La température de préchauffe est au moins égale à 80°C. La température de préchauffe peut être au moins égale à 100°C. La température de préchauffe est préférablement au moins égale à 120°C, plus préférablement encore au moins égale à 130°C, et plus préférablement encore au moins égale à 140°C.

Le procédé 100 comprend en outre une étape 104 de dépôt sur la surface du ressort 1 d'une composition réticulable comprenant un composé époxy. L'étape de dépôt 104 est effectuée après l'étape de préchauffage 103. Ainsi, à l'issue de l'étape de dépôt 104, la surface préchauffée de l'acier 1C est recouverte de composition réticulable non réticulée ou très faiblement réticulée.

Grâce à l'étape de préchauffage 103, la matrice 11E est plus fortement réticulée, ce qui confère au revêtement 11 une meilleure résistance mécanique générale, et en particulier une excellente résistance au gravillonnage.

Dans certains modes de réalisation, la composition réticulable est sous forme de poudre avant l'étape de dépôt 104. Le dépôt de la composition réticulable sous forme de poudre sur la surface du ressort 1 peut être effectué par trempage en bain fluidisé, ou bien par projection électrostatique, par exemple par projection électrostatique à effet corona ou triboélectrique. Les méthodes de projection électrostatique de poudres sont bien connues et ne sont donc pas décrites en détail ici. Lorsque la composition réticulable est sous forme de poudre, le fait que la surface du ressort 1 soit préchauffée à l'issue de l'étape de préchauffage 103 permet de faire gélifier la poudre, ce qui améliore le mouillage de la surface du ressort 1 et donc l'adhérence du revêtement 11 sur la surface du ressort 1. En outre, l'étape de préchauffage 103 permet de déposer une épaisseur importante de revêtement 11, pouvant aller jusqu'à une épaisseur minimale de 1200 µm, sur le ressort 1.

Le procédé 100 comprend en outre une étape 105 de chauffage de la surface du ressort 1. Plus concrètement, la surface du ressort 1 recouvert de composition réticulable est chauffée à une température suffisante pour réticuler la composition réticulable, pendant un temps suffisant. Cette température est supérieure à la température de préchauffe de l'étape de préchauffage 103. En d'autres termes, pendant l'étape de chauffage 105, la surface du ressort 1 est chauffée à une température supérieure à la température de préchauffe. En tout état de cause, à l'issue de l'étape de chauffage 105, la composition réticulable est réticulée, conduisant ainsi au revêtement 11 comprenant la matrice 11E, et le revêtement 11 ainsi obtenu présente une épaisseur minimum au moins égale à 120 µm. L'épaisseur minimum peut être au moins égale à 200 µm.

Dans certains modes de réalisation, le revêtement 11 est constitué d'une unique couche déposée en une seule étape de dépôt. En d'autres termes, dans le procédé 100, il n'y a pas d'autre d'étape de dépôt que l'étape de dépôt 104, et le revêtement 11 obtenu à l'issue de l'étape de chauffage 105 ne présente qu'une seule couche de matériau.

Pendant l'étape de chauffage 105, la surface du ressort 1 peut être chauffée par projection d'air chauffé et/ou par infrarouges, par exemple. En outre, l'étape de chauffage 105 peut ou non être effectuée à l'aide des mêmes moyens de chauffage que l'étape de préchauffage 103.

Dans certains modes de réalisation, pendant l'étape de chauffage 105, la surface du ressort 1 est chauffée à une température comprise entre 140°C et 200°C, de préférence comprise entre 140°C et 190°C, plus préférablement encore comprise entre 150°C et 180°C. Dans un mode de réalisation préféré, la surface du ressort 1 est chauffée à une température de 140°C, et la composition réticulable est susceptible d'être réticulée à une température de 140°C. Ceci limite la consommation d'énergie de l'étape de chauffage 105.

Comme mentionné précédemment, la composition réticulable est apte à être réticulée. La composition réticulable comprend donc en outre, en plus du composé époxy, un durcisseur, afin de permettre à la composition réticulable de réticuler. Le durcisseur peut être un unique composé chimique ou un mélange de composés chimiques aptes à conduire à la formation du polyépoxyde désiré. Par exemple, le durcisseur est le bisphénol A, le dicyandiamide (C₂H₄N₄), l'ortho-tolylbiguanide, un polyester carboxylique, ou un mélange de ceux-ci. La proportion de durcisseur stoechiométriquement par rapport avec le composé époxy peut être comprise entre 70% et 100%. De préférence, le durcisseur est présent dans la composition réticulable en proportions stoechiométriques ou sensiblement stoechiométriques avec le composé époxy.

En outre, la composition réticulable comprend typiquement un accélérateur, afin de diminuer le temps nécessaire à la réticulation de la composition.

De préférence, la composition réticulable est dépourvue de 2-méthylimidazole, afin de limiter l'impact du procédé 100 sur l'environnement.

Dans certains modes de réalisation, le composé époxy est à base de bisphénol A. Par « à base de bisphénol A », on entend que le composé époxy est obtenu par réaction de bisphénol A avec un composé d'époxydation. Par exemple, le composé époxy est obtenu par réaction de bisphénol A avec de l'épichlorhydrine.

La composition réticulable peut présenter un poids équivalent en époxy (« Epoxy Equivalent Weight » ou EEW en anglais) compris entre 750 et 850 g/équiv., par exemple environ égal à 800 g/équiv..

Le procédé 100 comprend en outre une étape 106 de refroidissement du ressort 1. Après l'étape de refroidissement 106, le ressort 1 revêtu du revêtement 11 peut être manipulé, et en particulier peut être installé dans une suspension de véhicule.

La composition réticulable peut comprendre en outre des additifs et/ou des charges.

En particulier, la composition réticulable peut comprendre au moins un agent anticorrosion, afin de mieux protéger l'acier 1C contre la corrosion. De préférence, l'agent anticorrosion est dépourvu d'élément zinc (Zn), afin de limiter l'impact du procédé 100 sur l'environnement. Plus préférablement encore, la composition réticulable est dépourvue d'élément zinc (Zn).

En outre, la composition réticulable peut comprendre entre 0,5% et 1,0% en masse de noir de carbone. La composition réticulable peut également comprendre du sulfate de baryte afin d'améliorer sa consistance et/ou de modifier son opacité, et/ou peut également comprendre du carbonate de calcium.

On va maintenant décrire, à l'aide de la FIG 2, un exemple de charges pouvant être comprises dans la composition réticulable afin d'améliorer les propriétés mécaniques du revêtement 11.

Dans cet exemple, la composition réticulable comprend :
- une charge de fibres ;
- une charge de silice ;
- une première charge de céramique ; et
- une deuxième charge de céramique.

Les fibres de la charge de fibres présentent une longueur moyenne en nombre au moins égale à 100 µm. Ladite longueur moyenne en nombre peut être comprise entre 100 µm et 150 µm. Optionnellement, les fibres de la charge de fibres peuvent présenter une longueur comprise entre 100 µm et 150 µm, et/ou un diamètre compris entre 3 µm et 4 µm.

La charge de silice présente un diamètre médian en masse au moins égal à 1 µm. De préférence, la charge de silice présente un diamètre médian en masse au moins égal à 10 µm, et par exemple égal à 15 µm. Les particules de la charge de silice peuvent avoir une dureté Mohs de 7. La taille maximale de particule de la charge de silice est de préférence au plus égale à 100 µm, et par exemple égale à 70 µm.

La première charge de céramique présente un diamètre médian en masse compris entre 30 µm et 70 µm. De préférence, la première charge de céramique présente un diamètre médian en masse compris entre 40 µm et 60 µm, et par exemple égal à 55 µm. La taille maximale de particule de la première charge de céramique est de préférence au plus égale à 110 µm. La taille minimale de particule de la première charge de céramique est de préférence au moins égale à 10 µm.

La deuxième charge de céramique présente un diamètre médian en masse au moins égal à 10 µm, et par exemple égal à 15 µm. Le diamètre médian en masse de la charge de silice et de la deuxième charge de céramique peuvent être égaux. La taille maximale de particule de la deuxième charge de céramique est de préférence au plus égale à 60 µm. La taille minimale de particule de la deuxième charge de céramique est de préférence au moins égale à 10 µm.

Comme mentionné ci-dessus, les diamètres médians en masse mentionnés ci-dessus peuvent être mesurés par tamisage. Par exemple, les diamètres médians en masse mentionnés ci-dessus peuvent être mesurés par tamisage conforme à la norme NF P18-560. La norme NF P18-560 est disponible auprès de l'agence française de normalisation (AFNOR).

La charge de fibres peut être une charge de fibres métalliques, une charge de fibres de carbone, ou une charge de fibres organiques, par exemple une charge de fibres aramide, comme le Kevlar (marque déposée). La charge de fibres peut être une charge de fibres minérales, qui peuvent être synthétiques ou non. Par « fibres minérales », on entend désigner les fibres inorganiques non métalliques. Par exemple, la charge de fibres peut être une charge de fibres de céramique, une charge de fibres comprenant de l'élément bore, ou une charge de fibres de verre.

La charge de silice peut être constituée d'au moins 80% en masse de silice (SiO₂), le reste étant constitué des impuretés inévitables (Al₂O₃, CaO, Fe₂O₃...). De préférence, la charge de silice est constituée d'au moins 90% en masse de silice, plus préférablement encore d'au moins 95% en masse de silice, et plus préférablement encore d'au moins 99% en masse de silice, le reste étant constitué des impuretés inévitables. Moins la charge de silice contient d'impuretés, plus elle présente une dureté importante, ce qui renforce encore davantage le revêtement 11.

La première et/ou la deuxième charge de céramique peuvent être des charges de billes de céramique. Les billes de céramique sont de préférence sphériques ou sensiblement sphériques. Par exemple, la première et/ou la deuxième charge de céramique sont des charges de billes de verre borosilicate. Les billes de verre borosilicate présentent une dureté importante, ce qui augmente la résistance au gravillonnage du revêtement 11. La première et/ou la deuxième charge de céramique peuvent également être des charges de billes constituées d'un mélange de zircone (ZrO₂) et de silice (SiO₂) et d'impuretés inévitables.

La FIG 2 illustre très schématiquement le revêtement 11 obtenu à partir de la composition réticulable décrite ci-dessus, une fois que cette composition a été réticulée.

La composition étant réticulée, le revêtement 11 comprend la matrice 11E déjà décrite ci-dessus.

Les fibres 21, les particules de silice 22 de la charge de silice, et les particules des deux charges de céramique sont piégées dans la matrice 11E. Dans l'exemple représenté, les particules de céramique des première et deuxième charges portent respectivement les références 23A et 23B.

On précise ici que la FIG 3 n'est pas à l'échelle, et que certaines dimensions, et notamment celles des particules des charges décrites ci-dessus, ont été exagérées ou diminuées afin d'améliorer la lisibilité du dessin.

En outre, bien que les fibres ou particules des différentes charges soient représentées sur la FIG 3 comme ayant toutes la même longueur ou taille de particule, leur longueur ou taille de particule présente en réalité une certaine variance autour des longueurs moyennes ou diamètres médians de particule décrits ci-dessus.

Comme illustré très schématiquement sur la FIG 3, les fibres 21 constituent un réseau macroscopique de fibres dans la matrice 11E.

Étant de taille relativement petite par rapport aux fibres 21, les particules de céramique 23A et 23B viennent densifier le réseau macroscopique de fibres 21. En outre, puisque les deux charges de céramique présentent des distributions de taille de particule différentes, les particules de l'une de ces charges viennent sensiblement combler les espaces laissés dans le réseau macroscopique de fibres 21 par les particules de l'autre charge de céramique, ce qui densifie encore le réseau macroscopique de fibres 21. Ceci améliore la résistance mécanique du revêtement 11.

Étant de taille plus petite que les particules de céramique 23A et 23B, les particules de silice 22 viennent sensiblement combler les espaces laissés dans le réseau macroscopique de fibres 21 par les particules de céramique 23A, et 23B, ce qui densifie encore plus le réseau macroscopique de fibres 21. Ceci améliore encore la résistance mécanique du revêtement 11.

Enfin, en raison de leur petite taille, les particules de silice 22 ont tendance à être présentes au voisinage immédiat de la surface du revêtement 11. Puisqu'elles présentent une dureté très importante, elles confèrent donc au revêtement 11 une grande résistance à la compression lors de l'impact de gravillons.

Ces différents facteurs interagissent pour conférer au revêtement 11 une résistance au gravillonnage nettement plus importante que les revêtements connus jusqu'ici, pour une même épaisseur de revêtement. Il est donc possible ou bien de diminuer l'épaisseur de revêtement à déposer en conservant la même durée de vie du revêtement, ou bien d'augmenter la durée de vie du revêtement pour une même épaisseur de revêtement.

Lorsque les fibres 21 présentent une longueur comprise entre 100 µm et 150 µm comme on l'a mentionné ci-dessus, les fibres 21 sont suffisamment courtes pour conserver au revêtement 11 un aspect lisse et brillant.

On va maintenant décrire différentes étapes optionnelles pouvant être mises en oeuvre dans le procédé 100 afin d'améliorer encore les propriétés du revêtement 11. On précise que toutes ou seulement certaines de ces étapes optionnelles peuvent être mises en oeuvre dans le procédé 100.

Le procédé 100 peut comprendre un traitement de surface 102 du ressort 1, avant l'étape de dépôt 104.

Le traitement de surface 102 peut comprendre une étape de phosphatation 102A.

L'étape de phosphatation 102A conduit à la formation, sur la surface du ressort 1, d'une couche de cristaux de phosphates. Ainsi, à l'issue du procédé 100, le ressort 1 comprend, entre le revêtement 11 et la surface du ressort 1, une couche 40 de cristaux de phosphates comme représenté schématiquement sur la FIG 3.

Par « cristaux de phosphates », on entend des cristaux de l'anion phosphate (PO₄)³⁻ avec un ou plusieurs cations métalliques. Dans certains modes de réalisation, les cristaux de phosphates comprennent des cristaux de l'anion phosphate (PO₄)³⁻ avec des cations de zinc (Zn²⁺) et de manganèse (Mn²⁺). Dans d'autres modes de réalisation, les cristaux de phosphates comprennent des cristaux de l'anion phosphate (PO₄)³⁻avec des cations de zinc (Zn²⁺), de manganèse (Mn²⁺) et de nickel (Ni²⁺).

L'étape de phosphatation 102A peut comprendre toute méthode de phosphatation appropriée. Les méthodes de phosphatation sont connues en soi et ne sont donc pas décrites en détail ici.

La couche 40 de cristaux de phosphates améliore grandement l'adhésion de la matrice 11E sur la surface du ressort 1.

Les cristaux de phosphates de la couche 40 présentent une taille moyenne en nombre au plus égale à 20 µm. De préférence, toutefois, les cristaux de phosphates de la couche 40 présentent une taille moyenne en nombre au plus égale à 10 µm. Étant ainsi de plus petite taille, les cristaux de phosphates résistent mieux aux contraintes que subit le revêtement 11 pendant l'impact d'un gravillon. Ceci améliore la résistance du revêtement 11 au gravillonnage.

La masse surfacique de la couche de cristaux de phosphates peut être comprise entre 1,5 g/m² et 4 g/m², et de préférence comprise entre 2,0 g/m² et 3,5 g/m². L'expression « masse surfacique » désigne le rapport entre la masse de cristaux de phosphates déposée sur le ressort 1 et la surface du ressort 1.

Le traitement de surface 102 peut en outre comprendre, après l'étape de phosphatation 102A, une étape de passivation 102B.

L'étape de passivation 102B conduit à la formation, sur les cristaux de phosphates, d'une couche 30 de silanes et/ou de silanes substitués. Ainsi, à l'issue du procédé 100, le ressort 1 comprend, entre le revêtement 11 et la couche 40 de cristaux de phosphates, une couche de silanes et/ou de silanes substitués 30 comme représenté schématiquement sur la FIG 3. La couche 30 peut comprendre un ou plusieurs silanes, un ou plusieurs silanes substitués, ou un mélange d'un ou plusieurs silanes avec un ou plusieurs silanes substitués. Par « silane », on entend désigner tout composé chimique linéaire ou ramifié de formule SiₙH₂ₙ₊₂, où n est un nombre entier. Ainsi, le monosilane SiH₄ est un exemple de silane. Par « silane substitué », on entend un silane dans lequel au moins un atome d'hydrogène est remplacé par un autre atome ou un groupe fonctionnel. Ainsi, un halosilane tel que le trichlorosilane ou un organosilane tel que le méthylsilane est un silane substitué.

L'étape de passivation 102B peut comprendre toute méthode appropriée pour conduire à la formation de la couche 30.

La couche 30 améliore encore l'adhésion de la matrice 11E sur la surface du ressort 1.

Après l'étape de phosphatation 102A et/ou l'étape de passivation 102B, on peut effectuer une étape de séchage 102C, pendant laquelle on provoque l'évaporation de l'eau ayant servi à l'étape de phosphatation 102A et/ou à l'étape de passivation 102B. Ce séchage peut être effectué en chauffant le ressort 1 et/ou en faisant passant le ressort 1 sous une atmosphère à pression réduite.

En outre, avant l'étape de phosphatation 102A et/ou l'étape de passivation 102B, on peut effectuer une étape 102-1 de nettoyage de la surface du ressort et/ou une étape 102-2 d'activation de la surface du ressort. L'étape 102-2 peut conduire à la formation de sites favorisant la formation des cristaux de phosphates de la couche 40.

### EXEMPLES

On va décrire ci-dessous des exemples de mise en oeuvre conforme au présent exposé. Il est rappelé que l'invention ne se limite pas à ces exemples.

### Exemple 1

Dans cet exemple, on a fourni six ressorts 6-1 à 6-6 identiques. Les ressorts 6-1 à 6-6 sont des ressorts d'essieu avant, réalisés en acier de nuance 54SiCr6, ayant un diamètre de fil de 14 mm et un poids total de 2140 g environ. Les ressorts 6-1 à 6-6 ont ensuite subi les étapes suivantes, réalisées de manière identique pour chaque ressort :
- grenaillage ;
- nettoyage de la surface du ressort ;
- activation de la surface du ressort ;
- phosphatation conduisant à la formation, sur la surface du ressort, d'une couche de cristaux de phosphates de taille moyenne inférieure à 5 µm, la couche de cristaux de phosphates ayant une masse surfacique comprise entre 2,0 et 2,4 g/m² ;
- passivation conduisant à la formation, sur les cristaux de phosphates, d'une couche de silanes ;
- séchage du ressort à une température de 120°C environ ;
- préchauffage, effectué de la manière suivante : le ressort est chauffé dans une étuve à projection d'air chaud, jusqu'à ce que sa surface atteigne une température de 190°C environ, puis sorti de l'étuve et conduit jusqu'au poste de dépôt de composition réticulable ;
- dépôt sur la surface préchauffée du ressort d'une composition réticulable sous forme de poudre décrite ci-après. Le dépôt a été effectué manuellement par projection électrostatique à effet corona, la surface préchauffée du ressort ayant une température minimale de 140°C à la fin de l'étape de dépôt ;
- chauffage du ressort dans une étuve à projection d'air chaud, la surface du ressort ayant une température de 165°C environ, de manière à réticuler la composition, conduisant ainsi au revêtement.

Une quantité différente de composition réticulable a été déposée sur chaque ressort, de manière à obtenir les épaisseurs consignées dans le tableau 1 ci-dessous. La composition réticulable, sous forme de poudre avant l'étape de dépôt, présentait les caractéristiques suivantes :
- composé époxy : obtenu par réaction par réaction de bisphénol A avec de l'épichlorhydrine (EEW = 800 g/équiv. environ) ;
- charge de fibres minérales synthétiques d'une longueur comprise entre 100 µm et 150 µm ;
- charge de silice : charge de cristobalite pyrolysée constituée d'environ 99% en masse de silice (SiO₂), et présentant un diamètre médian en masse d'environ 15 µm mesuré par tamisage conforme à la norme NF P18-560 ;
- première charge de céramique : charge de billes de verre borosilicate sensiblement sphériques, présentant un diamètre médian en masse d'environ 55 µm mesuré par tamisage ;
- deuxième charge de céramique : charge de billes de verre borosilicate sensiblement sphériques, présentant un diamètre médian en masse d'environ 15 µm mesuré par tamisage ;
- durcisseur : bisphénol A, en proportions stoechiométriques avec le composé époxy ;
- additif : environ 1,0% en masse de noir de carbone.

Après revêtement, les ressorts 6-1 à 6-6 ont été soumis à un essai de gravillonnage conforme au protocole SAE J400 dans sa révision en vigueur en juin 2007.

Le protocole SAE J400 est un protocole standardisé et très bien connu dans le domaine des ressorts pour suspension de véhicule. La description complète de ce protocole est disponible auprès de l'organisme américain de standardisation « Society of Automotive Engineers ». Il peut être effectué à différentes températures de surface du ressort, dont la plus basse est de -30°C. Une température de surface du ressort plus basse rend l'essai de gravillonnage plus sévère, car une température plus basse diminue la souplesse du revêtement et donc sa résistance aux impacts de gravillons.

Dans le cas présent, avant l'essai de gravillonnage, les ressorts ont été placés dans un congélateur à -36°C pendant 24 heures, puis placés dans le gravelomètre, de sorte que l'essai de gravillonnage commence dès que la surface du ressort atteint une température de - 30°C, comme décrit dans le protocole SAE J2800.

De même, le protocole SAE J2800 est un protocole standardisé, dont la description complète est disponible auprès de l'organisme américain de standardisation « Society of Automotive Engineers ».

Après l'essai de gravillonnage décrit ci-dessus, les ressorts 6-1 à 6-6 ont été soumis à un essai de corrosion au brouillard salin neutre conforme à la norme ISO 9227:2012 pendant une durée de 120 heures. La description complète de cette norme est disponible auprès de l'Organisation internationale de normalisation (« International Organization for Standardization ») (ISO).

Après l'essai de corrosion décrit ci-dessus, chacun des ressorts 6-1 à 6-6 a été examiné visuellement afin de constater s'ils présentaient des piqûres de corrosion (aussi connues sous le nom anglais de « corrosion pits »). L'examen visuel a d'abord été effectué à l'oeil nu, puis à l'aide d'une caméra avec un grossissement allant jusqu'à 10x. La présence d'une piqûre de corrosion sur un ressort indique que le revêtement a été endommagé pendant l'essai de gravillonnage au point de mettre à nu l'acier du ressort. Le nombre de piqûres de corrosion visibles chaque ressort à l'issue de l'essai de corrosion est consigné dans le tableau 1 ci-dessous.

**Tableau 1**

| Ressort n° | Épaisseur moyenne du revêtement déposé (µm) | Épaisseur minimale du revêtement déposé (µm) | Nombre de piqûres de corrosion sur le ressort |
|---|---|---|---|
| 6-1 | 508 | 236 | 0 |
| 6-2 | 545 | 262 | 1 |
| 6-3 | 646 | 348 | 0 |
| 6-4 | 665 | 364 | 0 |
| 6-5 | 682 | 386 | 0 |
| 6-6 | 690 | 428 | 0 |

Il ressort de cet exemple qu'une épaisseur minimale de revêtement au moins égale à 350 µm permet au revêtement de résister à l'essai de gravillonnage standardisé le plus sévère disponible à l'heure actuelle. Il en résulte que le ressort peut également résister à l'essai de gravillonnage-fatigue-corrosion standardisé (défini par le protocole SAE J2800) le plus sévère disponible à l'heure actuelle.

Une épaisseur minimale de revêtement au moins égale à 200 µm mais inférieure à 350 µm est suffisante pour résister à des essais de gravillonnage moins sévères.

### Exemple 2

Dans cet exemple, on a fourni un lot de plaquettes identiques. Par « plaquettes », on entend ici des tôles minces en acier, de dimensions et caractéristiques standardisées, destinées à tester des revêtements. Les plaquettes utilisées dans cet exemple sont commercialisées sous la référence « Q-PANEL R-48 » par la société Q-LAB Corporation, et présentent les caractéristiques suivantes : réalisées en nuance d'acier SAE 1008/1010 ; surface d'aspect mat, présentant une rugosité Ra comprise entre 0,64 µm et 1,65 µm (entre 25 et 65 micropouces (« micro-inches » en anglais)) ; longueur de 20,3 cm (8 pouces) ; largeur de 10,2 cm (4 pouces) ; épaisseur de 0,81 mm (0,032 pouces) en l'absence de tout revêtement.

Les plaquettes ont ensuite subi les étapes suivantes, réalisées de manière identique pour chaque plaquette :
- nettoyage de la surface de la plaquette, par dégraissage manuel à la méthyilisobutylcétone (Methyl isobutyl ketone ou MIBK en anglais ; N° CAS : 108-10-1, N° ECHA : 100.003.228) ;
- séchage de la surface de la plaquette à l'air ambiant ;
- dépôt sur la surface de la plaquette d'une composition réticulable sous forme de poudre. Le dépôt a été effectué manuellement par projection électrostatique à effet corona, la surface de la plaquette étant à température ambiante pendant le dépôt ;
- chauffage de la plaquette dans une étuve à projection d'air chaud pendant 10 minutes à une température de 140°C, la surface de la plaquette atteignant une température de 140°C au bout d'environ 3 minutes, de manière à réticuler la composition, conduisant ainsi au revêtement.

Une quantité semblable de composition réticulable a été déposée sur chaque plaquette, de manière à obtenir une épaisseur de revêtement de 120 µm (+/- 10 µm) sur chaque plaquette. La composition réticulable, sous forme de poudre avant l'étape de dépôt, est identique à celle de l'exemple 1 ci-dessus.

Après revêtement, l'épaisseur du revêtement a été contrôlée sur 8 points suivant la norme ISO 2808:2007, puis les plaquettes ont été stockées durant 24 heures à une température de 23°C (+/- 2°C) et à 50% (+/- 5%) d'humidité. Après cette période de stockage de 24 heures, les plaquettes ont été soumises à des essais normalisés dont les résultats sont consignés dans le tableau 2 ci-dessous.

**Tableau 2**

| Essais | | Résultats des essais | |
|---|---|---|---|
| Essai d'impact selon la norme ASTM D2794-93 (2010) avec un diamètre d'impacteur (« indenter diameter » en anglais) de 15,9 mm : | | | 1. Aucun craquellement ou détachement du revêtement n'a été observé. |
| | 1. Impact direct (sur le côté revêtu de la plaquette) à 10 N.m. | | |
| | | | 2. Aucun craquellement ou détachement du revêtement n'a été observé. |
| | 2. Impact indirect (sur le côté non revêtu - opposé au côté revêtu - de la plaquette) à 10 N.m. | | |
| Essai d'emboutissage (« Erichsen cupping test » en anglais) selon la norme ISO 1520:2006 à une profondeur de 8 mm. | | Aucun craquellement ou détachement du revêtement n'a été observé. | |
| Essai de quadrillage (« cross-cut adhésion test » en anglais) selon la norme ISO 2409:2013. | | GT 0 (c'est-à-dire : aucun décollement du revêtement n'a été observé). | |
| Essai de pliage (mandrin conique) selon la norme ISO 6860:2006 avec un mandrin de diamètre 3 mm. | | Aucun craquellement ou détachement du revêtement n'a été observé. | |
| Détermination de l'indice de brillance à 60 degrés selon la norme ISO 2813:2014. | | Indice de brillance à 60 degrés mesuré à 80% (+/- 5%). | |

Les normes ASTM et ISO décrites ci-dessus sont des normes très bien connues dans le domaine des revêtements. Les descriptions complètes des normes ASTM sont disponibles auprès de l'organisation américaine ASTM International, et les descriptions complètes des normes ISO sont disponibles auprès de l'Organisation internationale de normalisation (« International Organization for Standardization ») (ISO).

Il ressort de cet exemple que la composition de revêtement décrite en rapport avec l'exemple 1 permet d'obtenir un revêtement qui présente un excellent comportement mécanique vis-à-vis des déformations tant lentes (essai d'emboutissage selon la norme ISO 1520:2006, essai de pliage (mandrin conique) selon la norme ISO 6860:2006) que rapides (essai d'impact selon la norme ASTM D2794-93 (2010)), et une excellente adhésion sur son support (essai de quadrillage selon la norme ISO 2409:2013).

On observera que ces résultats sont obtenus bien que la surface des plaquettes n'ait pas été préchauffée. (Un tel préchauffage ne serait pas praticable, car du fait de leur épaisseur inférieure à 1 mm, les plaquettes présentent une inertie thermique trop faible pour permettre de maîtriser leur température de surface à l'issue du préchauffage.) Or, comme on l'a expliqué ci-dessus, l'étape de préchauffage améliore la résistance mécanique générale du revêtement. En conséquence, il faut s'attendre à ce que le revêtement d'un élément de suspension conforme au présent exposé présente un comportement mécanique encore meilleur vis-à-vis des déformations tant lentes que rapides.

Il ressort en outre de l'essai de détermination de l'indice de brillance à 60 degrés selon la norme ISO 2813:2014 que le revêtement présente un aspect brillant, comme l'indique la valeur de brillance mesurée de 80% +/- 5% à 60 degrés. Cet aspect brillant est compatible avec les exigences d'aspect des revêtements pour élément de suspension de véhicule.

## Revendications

1. Élément de suspension de véhicule pourvu d'un revêtement (11), le revêtement comprenant une matrice de polymère réticulé (11E) comprenant un polyépoxyde et présentant une épaisseur minimum (E1) au moins égale à 120 µm,
dans lequel le revêtement (11) comprend, dans la matrice de polymère réticulé (11E):
- une charge de fibres (21) d'une longueur moyenne en nombre au moins égale à 100 µm ;
- une charge de silice (22) présentant un diamètre médian en masse au moins égal à 1 µm ;
- une première charge de céramique (23A) présentant un diamètre médian en masse compris entre 30 µm et 70 µm ; et
- une deuxième charge de céramique (23B) présentant un diamètre médian en masse au moins égal à 10 µm.

2. Élément de suspension de véhicule selon la revendication 1, dans lequel le revêtement (11) est constitué d'une unique couche déposée en une seule étape de dépôt.

3. Élément de suspension de véhicule selon la revendication 1 ou 2, dans lequel ladite longueur moyenne en nombre de la charge de fibres (21) est comprise entre 100 µm et 150 µm.

4. Élément de suspension de véhicule selon l'une quelconque des revendications 1 à 3, dans lequel les fibres de la charge de fibres (21) présentent une longueur comprise entre 100 µm et 150 µm.

5. Élément de suspension de véhicule selon l'une quelconque des revendications 1 à 4, dans lequel les fibres de la charge de fibres (21) présentent un diamètre compris entre 3 µm et 4 µm.

6. Élément de suspension de véhicule selon l'une quelconque des revendications 1 à 5, comprenant, entre le revêtement (11) et la surface de l'élément de suspension, une couche (40) de cristaux de phosphates, les cristaux de phosphates présentant une taille moyenne en nombre au plus égale à 20 µm, et de préférence au plus égale à 10 µm.

7. Élément de suspension de véhicule selon la revendication 6, comprenant, entre le revêtement (11) et la couche (40) de cristaux de phosphates, une couche de silanes et/ou de silanes substitués (30).

8. Élément de suspension de véhicule selon l'une quelconque des revendications 1 à 7, lequel élément de suspension est un ressort hélicoïdal (1), ou une barre stabilisatrice cambrée, ou une barre droite, de préférence en acier.

9. Procédé (100) de dépôt d'un revêtement (11) sur un élément de suspension de véhicule, le procédé (100) comprenant les étapes de :
fourniture (101) de l'élément de suspension à revêtir ;
préchauffage (103) de la surface de l'élément de suspension à une température de préchauffe au moins égale à 80°C ;
dépôt (104) sur la surface préchauffée de l'élément de suspension d'une composition réticulable comprenant un composé époxy ;
chauffage (105) de la surface de l'élément de suspension à une température supérieure à la température de préchauffe, de manière à réticuler la composition, conduisant ainsi au revêtement,
le revêtement (1) ainsi obtenu présentant une épaisseur minimum (E1) au moins égale à 120 µm, , dans lequel la composition réticulable comprend :
- une charge de fibres (21) d'une longueur moyenne en nombre au moins égale à 100 µm ;
- une charge de silice (22) présentant un diamètre médian en masse au moins égal à 1 µm ;
- une première charge de céramique (23A) présentant un diamètre médian en masse compris entre 30 µm et 70 µm ; et
- une deuxième charge de céramique (23B) présentant un diamètre médian en masse au moins égal à 10 µm.

10. Procédé (100) selon la revendication 9, comprenant en outre, avant l'étape de dépôt (104), une étape de phosphatation (102A) conduisant à la formation, sur la surface de l'élément de suspension, d'une couche (40) de cristaux de phosphates, les cristaux de phosphates présentant une taille moyenne en nombre au plus égale à 20 µm, et de préférence au plus égale à 10 µm.

11. Procédé (100) selon la revendication 10, comprenant en outre, après l'étape de phosphatation (102A), une étape de passivation (102B) conduisant à la formation, sur les cristaux de phosphates, d'une couche de silanes et/ou de silanes substitués (30).

12. Procédé (100) selon l'une quelconque des revendications 9 à 11, dans lequel la composition réticulable est sous forme de poudre avant l'étape de dépôt (104), et le dépôt de ladite poudre sur la surface de l'élément de suspension est effectué par projection électrostatique.

13. Procédé (100) selon l'une quelconque des revendications 9 à 12, dans lequel la composition réticulable comprend en outre au moins un agent anticorrosion, de préférence dépourvu d'élément zinc.

## Patentansprüche

1. Fahrzeugaufhängungselement, welches mit einer Beschichtung (11) versehen ist, wobei die Beschichtung eine vernetzte Polymermatrix (11E) umfasst, die ein Polyepoxid umfasst und eine Mindestdicke (E1) von wenigstens gleich 120 µm aufweist,
wobei die Beschichtung (11) in der vernetzten Polymermatrix (11E) umfasst:
- einen Faser-Füllstoff (21) mit einer zahlenmäßig mittleren Länge von wenigstens gleich 100 µm,
- einen Siliciumdioxid-Füllstoff (22), der einen mittleren Massendurchmesser von wenigstens gleich 1 µm aufweist,
- einen ersten keramischen Füllstoff (23A), der einen mittleren Massendurchmesser im Bereich zwischen 30 µm und 70 µm aufweist, und
- einen zweiten keramischen Füllstoff (23B), der einen mittleren Massendurchmesser von wenigstens gleich 10 µm aufweist.

2. Fahrzeugaufhängungselement nach Anspruch 1, bei dem die Beschichtung (11) aus einer einzigen Schicht besteht, die in einem einzigen Abscheidungsschritt abgeschieden wird.

3. Fahrzeugaufhängungselement nach Anspruch 1 oder 2, wobei die zahlenmäßig mittlere Länge des Faser-Füllstoffs (21) im Bereich zwischen 100 µm und 150 µm liegt.

4. Fahrzeugaufhängungselement nach einem der Ansprüche 1 bis 3, bei dem die Fasern des Faser-Füllstoffs (21) eine Länge im Bereich zwischen 100 µm und 150 µm aufweisen.

5. Fahrzeugaufhängungselement nach einem der Ansprüche 1 bis 4, bei dem die Fasern des Faser-Füllstoffs (21) einen Durchmesser im Bereich zwischen 3 µm und 4 µm aufweisen.

6. Fahrzeugaufhängungselement nach einem der Ansprüche 1 bis 5, das zwischen der Beschichtung (11) und der Oberfläche des Aufhängungselements eine Schicht (40) aus Phosphatkristallen umfasst, wobei die Phosphatkristalle eine zahlenmäßig mittlere Größe aufweisen, die höchstens gleich 20 µm und vorzugsweise höchstens gleich 10 µm beträgt.

7. Fahrzeugaufhängungselement nach Anspruch 6, das zwischen der Beschichtung (11) und der Schicht (40) aus Phosphatkristallen eine Schicht aus Silanen und/oder substituierten Silanen (30) umfasst.

8. Fahrzeugaufhängungselement nach einem der Ansprüche 1 bis 7, welches Aufhängungselement eine Schraubenfeder (1) oder ein gebogener Stabilisator oder ein gerader Stab, vorzugsweise aus Stahl, ist.

9. Verfahren (100) zum Abscheiden einer Beschichtung (11) auf einem Fahrzeugaufhängungselement, wobei das Verfahren (100) die Schritte umfasst des:
Bereitstellens (101) des zu beschichtenden Aufhängungselements,
Vorwärmens (103) der Oberfläche des Aufhängungselements auf eine Vorwärmtemperatur von wenigstens gleich 80 °C,
Abscheidens (104) einer vernetzbaren Zusammensetzung, die eine Epoxidverbindung umfasst, auf der vorgewärmten Oberfläche des Aufhängungselements,
Erhitzens (105) der Oberfläche des Aufhängungselements auf eine Temperatur oberhalb der Vorwärmtemperatur, um die Zusammensetzung zu vernetzen, was zu der Beschichtung führt,
wobei die so erhaltene Beschichtung (1) eine Mindestdicke (E1) von wenigstens gleich 120 µm aufweist, wobei die vernetzbare Zusammensetzung umfasst:
- einen Faser-Füllstoff (21) mit einer zahlenmäßig mittleren Länge von wenigstens gleich 100 µm,
- einen Siliciumdioxid-Füllstoff (22), der einen mittleren Massendurchmesser von wenigstens gleich 1 µm aufweist,
- einen ersten keramischen Füllstoff (23A), der einen mittleren Massendurchmesser im Bereich zwischen 30 µm und 70 µm aufweist, und
- einen zweiten keramischen Füllstoff (23B), der einen mittleren Massendurchmesser von wenigstens gleich 10 µm aufweist.

10. Verfahren (100) nach Anspruch 9, das ferner vor dem Abscheidungsschritt (104) einen Phosphatierungsschritt (102A) umfasst, der zur Bildung einer Schicht (40) aus Phosphatkristallen auf der Oberfläche des Aufhängungselements führt, wobei die Phosphatkristalle eine zahlenmäßig mittlere Größe von höchstens gleich 20 µm und vorzugsweise höchstens gleich 10 µm aufweisen.

11. Verfahren (100) nach Anspruch 10, das ferner nach dem Phosphatierungsschritt (102A) einen Passivierungsschritt (102B) umfasst, der zur Bildung einer Schicht aus Silanen und/oder substituierten Silanen (30) auf den Phosphatkristallen führt.

12. Verfahren (100) nach einem der Ansprüche 9 bis 11, bei dem die vernetzbare Zusammensetzung vor dem Abscheidungsschritt (104) in Pulverform vorliegt und die Abscheidung des Pulvers auf der Oberfläche des Aufhängungselements durch elektrostatisches Sprühen erfolgt.

13. Verfahren (100) nach einem der Ansprüche 9 bis 12, bei dem die vernetzbare Zusammensetzung ferner wenigstens ein Antikorrosionsmittel, vorzugsweise ohne Zink-Element, umfasst.

## Claims

1. A vehicle suspension element provided with a coating (11), the coating comprising a reticulated polymer matrix (11E) comprising a polyepoxide and having a minimum thickness (E1) at least equal to 120 µm,
wherein the coating (11) comprises, in the reticulated polymer matrix (11E):
- a fibre filler (21) of an average length by number at least equal to 100 µm;
- a silica filler (22) having a median diameter in mass at least equal to 1 µm;
- a first ceramic filler (23A) having a median diameter in mass between 30 µm and 70 µm; and
- a second ceramic filler (23B) having a median diameter in mass at least equal to 10 µm.

2. The vehicle suspension according to claim 1, wherein the coating (11) is constituted by a single layer deposited in a single depositing step.

3. The vehicle suspension according to claim 1 or 2, wherein said average length by number of the fibre filler (21) is between 100 µm and 150 µm.

4. The vehicle suspension according to any one of claims 1 to 3, wherein the fibres of the fibre filler (21) have a length between 100 µm and 150 µm.

5. The vehicle suspension according to any one of claims 1 to 4, wherein the fibres of the fibre filler (21) have a diameter between 3 µm and 4 µm.

6. The vehicle suspension according to any one of claims 1 to 5, comprising, between the coating (11) and the surface of the suspension element, a layer (40) of phosphate crystals, the phosphate crystals having an average size by number at most equal to 20 µm, and preferably at most equal to 10 µm.

7. The vehicle suspension according to claim 6, comprising, between the coating (11) and the layer (40) of phosphate crystals, a layer of silanes and/or of substituted silanes (30).

8. The vehicle suspension according to any one of claims 1 to 7, which suspension element is a helicoidal spring (1), or a cambered stabilising bar, or a straight bar, preferably made of steel.

9. A process (100) for depositing a coating (11) on a vehicle suspension element, the process (100) comprising the steps of:
providing (101) of the suspension element to be coated;
preheating (103) of the surface of the suspension element to a preheating temperature at least equal to 80°C;
depositing (104) on the preheated surface of the suspension element of a cross-linkable composition comprising an epoxy compound;
heating (105) of the surface of the suspension element to a temperature greater than the preheating temperature so as to cross-link the composition, therefore resulting in the coating,
the resulting coating (1) having a minimum thickness (E1) at least equal to 120 µm,
wherein the cross-linkable composition comprises:
- a fibre filler (21) of average length by number at least equal to 100 µm;
- a silica filler (22) having a median diameter in mass at least equal to 1 µm;
- a first ceramic filler (23A) having a median diameter in mass between 30 µm and 70 µm; and
- a second ceramic filler (23B) having a median diameter in mass at least equal to 10 µm.

10. The process (100) according to claim 9, also comprising, prior to the depositing step (104), a phosphating step (102A) resulting in the formation, on the surface of the suspension element, of a layer (40) of phosphate crystals, the phosphate crystals having an average size by number at most equal to 20 µm, and preferably at most equal to 10 µm.

11. The process (100) according to claim 10, also comprising, after the phosphating step (102A), a passivation step (102B) resulting in the formation, on the phosphate crystals, of a layer of silanes and/or of substituted silanes (30).

12. The process (100) according to any one of claims 9 to 11, wherein the cross-linkable composition is in the form of powder prior to the depositing step (104), and the depositing of said powder on the surface of the suspension element is done by electrostatic projection.

13. The process (100) according to any one of claims 9 to 12, wherein the cross-linkable composition also comprises at least one anticorrosion agent, preferably devoid of any zinc element.
